# EUROPEAN PATENT SPECIFICATION

(11) **EP 1 942 299 B1**
(45) Date of publication and mention of the grant of the patent: **22.09.2010**
(21) Application number: 08006375.3
(22) Date of filing: 10.06.2005
(51) Int. Cl.: F16M 11/24, F16M 11/04, F16M 13/02

(54) **Mechanism for positional adjustment of an attached device**
Mechanismus zur Positionseinstellung einer befestigten Vorrichtung
Mécanisme pour l'ajustement en position d'un dispositif attaché

(30) Priority: 10.06.2004 US 578546 P
(43) Date of publication of application: 09.07.2008
(62) Divisional of application: 05760459.7
(73) Proprietor: Humanscale Corporation, New York NY 10010 (US)
(72) Inventor: Saez, Manuel, Brooklyn NY 11237-2312 (US)
(74) Representative: Price, Nigel John King

(56) References cited:
- GB-A- 2 294 632
- US-A- 2 081 677
- US-A- 3 297 291
- US-A- 4 039 818
- US-A- 4 695 024
- US-A1- 2004 031 893
- US-B1- 6 220 717

## Description

The present invention is directed to a bracket for adjustably maintaining a device support arm at a given position on a post. It finds an application in mechanisms useful for facilitating positional adjustment of an attached device, for example a height adjustment mechanism for use with an input device or a display device, such a video display. The positional adjustment mechanism allows for easy vertical adjustment of a device, placing the device in a position more ergonomically desirable for a user. The mechanism can further include components, such as a device support arm.

### BACKGROUND

With the technological innovation of the last 15 years, more and more individuals are spending an increasing amount of time using computers. Accordingly, computer users are spending an increasing amount of time sitting in front of a video display unit. This time encompasses activities including inputting data, viewing video display, and otherwise interacting with digital media.

The increasing amount of time associated with such activity has also been associated with various health problems, particularly stemming from improper posture. These problems include muscle strain, fatigue, and stress. According to experts in ergonomics, though, there are several easy and effective ways in which computer users can improve their physical comfort, fight fatigue, and reduce the risk of injuries from repetitive motions.

Posture is one area in which minor adjustments can quickly yield benefits. Even at home, but especially in a more stressful environment, like an office, users may force their bodies into rigid positions that result in fatigue, muscle strain, and, potentially, injury. Maintaining what experts refer to as optimal ergonomic positioning can increase energy levels and improve overall comfort, although it may take a few weeks before the results are noticeable. Good posture keeps the spine in what health professionals call the neutral position. Achieving a neutral posture while seated upright in a chair with good lumbar support entails lifting the rib cage away from the hips, tucking in the belly, pulling the shoulders back, centering the weight of the head atop the spine, and maintaining the lower back in a gentle C-shaped curve. Sustaining this position can help reduce muscle strain and relieve pressure on the lower back.

Beyond spinal posture, optimal ergonomic positioning requires tailoring the work area to fit the user's needs. Among things necessary to accomplish that is to position a video display being used at an appropriate eye level. Having the video display substantially at eye-level reduces muscle strain caused by the weight of the head leaning too far backward or forward.

The prior art discloses multiple methods for adjusting the position of a video display. Generally, positional changes are referred to in view of three adjustments: 1) vertical adjustment (i.e. adjusting the height of the display); 2) horizontal adjustment (i.e. adjusting the side-to-side position); and 3) tilt adjustment (i.e. adjusting the degree to which the display is tilted from the horizontal). In some cases, the prior art has attempted to supply a mechanism for all three positional adjustments. For example, U.S. Patent No. 6,149,253 discloses a system comprising a display platform supported on a frame with a lift actuator, the display platform having a swivel base, a swivel actuator, a tilt actuator, and a display table. Systems such as this, while functional, are inefficient and bulky. Further, such systems are limited to use with larger displays, such as conventional computer monitors and conventional CRT television sets.

The present state of the art in video display has an emphasis on flat screen designs. This conforms to the market demand for higher performance, less space consumption, and a more streamlined appearance. To meet this demand, it is becoming common to have flat screen video displays attached to a work area with some manner of display arm. These display arms may be non-movable providing only a single viewing position. In such situations, vertical adjustment of the display requires detaching the display arm and physically raising or lowering the point of attachment to the work area. In other embodiments, display arms may be hinged providing for horizontal movement of the attached video display. Again, however, vertical adjustment is not possible without physically detaching the display arm and raising or lowering the point of attachment to the work area.

So-called "high tech" work areas demand flexibility for accommodating various users. Furthermore, the daily needs of individual users can also change. To be ergonomically beneficial, a video display should be capable of vertical adjustment to a most comfortable position.

Accordingly, it would be advantageous to have a mechanism allowing easy adjustment of the vertical position of a video display, such as a flat screen computer monitor. Such height adjustment mechanism should be capable of being mounted directly to a work station. Further, such height adjustment mechanism should be capable of being mounted in conjunction with a display arm or other mechanism allowing for further positional adjustment. Additionally, such height adjustment mechanism should be capable of use with a large variety of video displays or input devices without requiring additional attachment adapters.

US-A-2 081 677 discloses a bracket according to the preamble of claim 1. This device is used to prevent relative movement between telescoping members, such as the sections of microphone stands or the like. The device consists of a length of spring wire having crossed portions and an intermediate expandable loop adapted to encircle and grip the smaller of the two telescoping members. The end portions of the wire extend radially from the loop contiguously to the crossed portions and serve as means for adjusting the stop on the smaller member. The inner surface of the loop is flat and engagable with the smaller member. The wire forming the device has a torsional twist therein so disposed as to maintain the axial flat surface of the loop parallel with the axis thereof so as substantially to resist slidable movement under the influence of axially applied forces imparted thereto.

US-B1-6 220 717 discloses a rear viewing mirror for use in combination with an elevated hunter platform. The device comprises a flexible rod with a mirror element on one end of the rod and a clamp at the other end of the rod. The clamp includes a pair of pivotally attached handles, each handle including a finger element. A spring is provided internally of the handles, coaxially of the pivot point, to bias the two finger elements together. The spring is actuated by force applied to the pair of the handles to move the finger elements apart.

### SUMMARY OF THE INVENTION

According to a first aspect of the present invention there is provided a bracket for adjustably maintaining a device support arm at a given position on a post, the bracket comprising:
a compressible ring-shaped cover having a central opening therethrough and having an oblong end; and
a spring component contained within the cover;
wherein the spring component provides a gripping force toward the central opening in the cover, and wherein compression of the oblong end of the cover provides pressure on the spring component forcing the spring component to take on a more rounded shape, therefore releasing the gripping force of the spring component.

In a particular embodiment of the invention, there is provided a post for supporting a device support arm, and the post includes a bracket in accordance with the above first aspect of the present invention.

According to a second aspect of the present invention there is provided a positional adjustment mechanism comprising:
a device support arm comprising:
   a) a horizontal arm;
   b) a parallelogram arm comprising:
      i) a lower arm bar,
      ii) an upper arm bar comprising an upper surface and two opposing side surfaces,
      iii) a front parallelogram pivot bracket,
      iv) a rear parallelogram pivot bracket, and
      v) a gas spring attached at one end to the lower arm bar and attached at the other end to the upper surface of the upper arm bar;
   c) a dual pivot attachment connecting the horizontal arm to the parallelogram arm, said dual pivot attachment comprising a front pivot and a rear pivot, both pivots pivoting in the same plane;
   d) a device attachment bracket attached to the horizontal arm; and
   e) a support attachment bracket attached to the parallelogram arm; and
the bracket of the above first aspect of the present invention.

The hereinafter described and illustrated embodiment of positional adjustment mechanism in accordance with the second aspect of the present invention comprises a device support arm which is particularly beneficial in that the dual pivot attachment allows for 180° lateral movement of the horizontal arm to either side of the support arm. More particularly, the support arm is capable of folding at the dual pivot attachment such that the horizontal arm is positioned adjacent to the parallelogram arm.

According to a third aspect of the present invention there is provided a positional adjustment mechanism comprising:
a device support arm comprising:
   a) a front arm link;
   b) a rear arm link;
   c) an offset pivot attachment having a single pivot axis and connecting the front arm link to the rear arm link such that when the support arm is fully extended, the front arm link and the rear arm link are aligned in a straight line with the pivot attachment offset to one side;
   d) a device attachment bracket; and
   e) a support attachment bracket, wherein the rear arm link is greater in length
   that the front arm link; and
the bracket of above first aspect of the present invention.

In the illustrated embodiment of positional adjustment mechanism in accordance with the third aspect of the present invention, the device support arm is again particularly beneficial in that the support arm is capable of folding at the offset pivot attachment such that the front arm link is positioned adjacent to the rear arm link. The device support arm further preferentially includes a mechanism for locking the support arm into an extended position.

Embodiments of apparatus in accordance with the present invention will now be described, by way of example only, with reference to the accompanying drawings. Although the front end height adjustment mechanisms (FEA mechanisms) illustrated in Figs. 1-7b, the device support arm configurations illustrated in Figs. 8-8l, in Figs. 9 and in Figs. 10-13 are not in accordance with the present invention in the precise form illustrated, in that they omit the bracket of the present invention, the present invention encompasses various combinations of these FEAs and device support arms when used in combination with the bracket of the present invention.

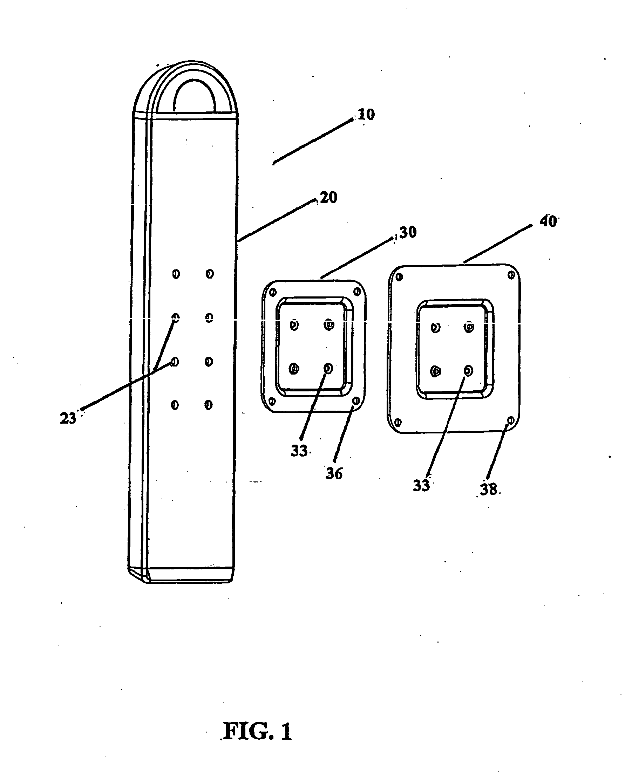

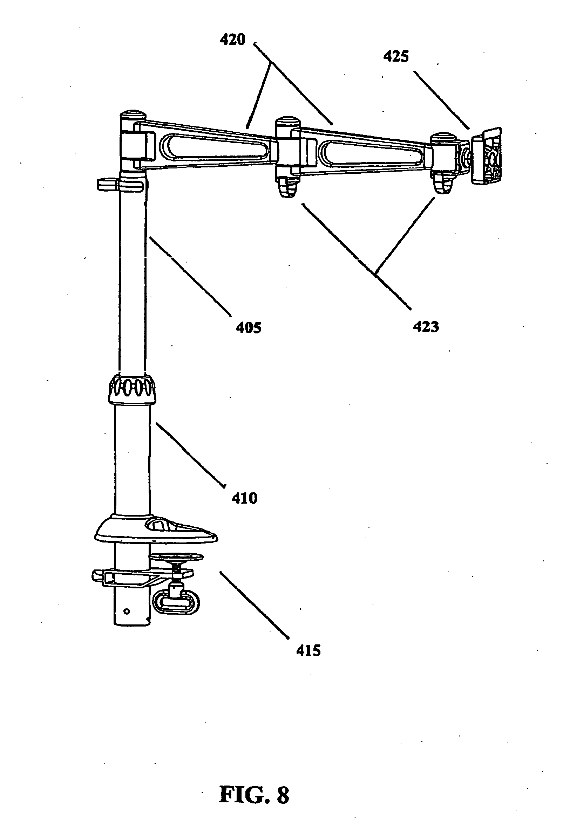

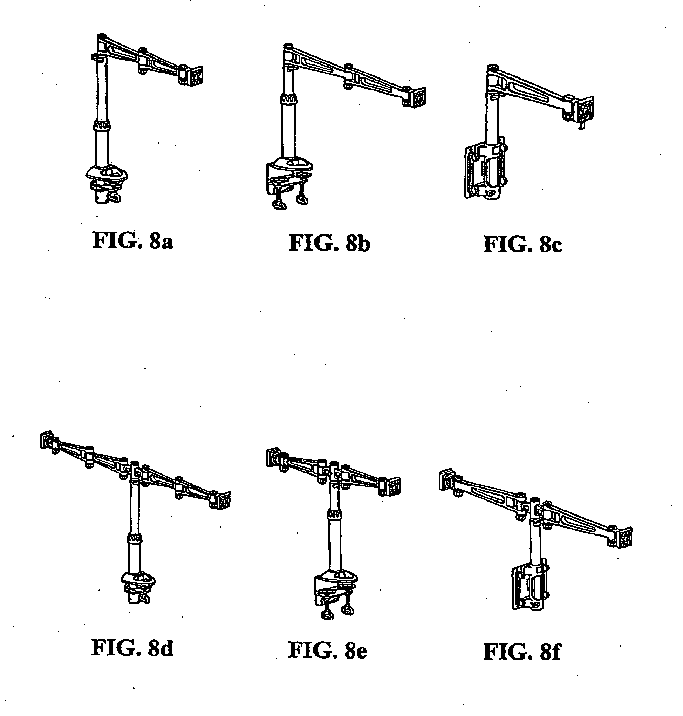

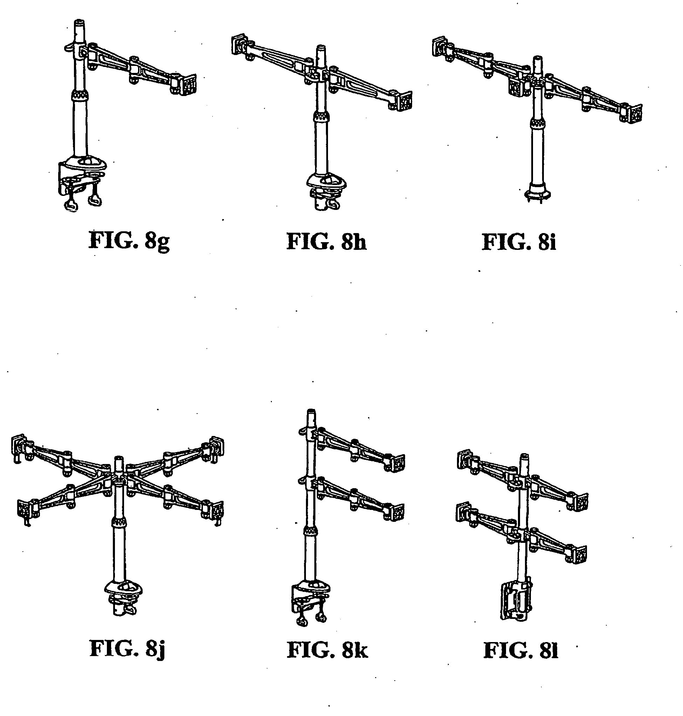

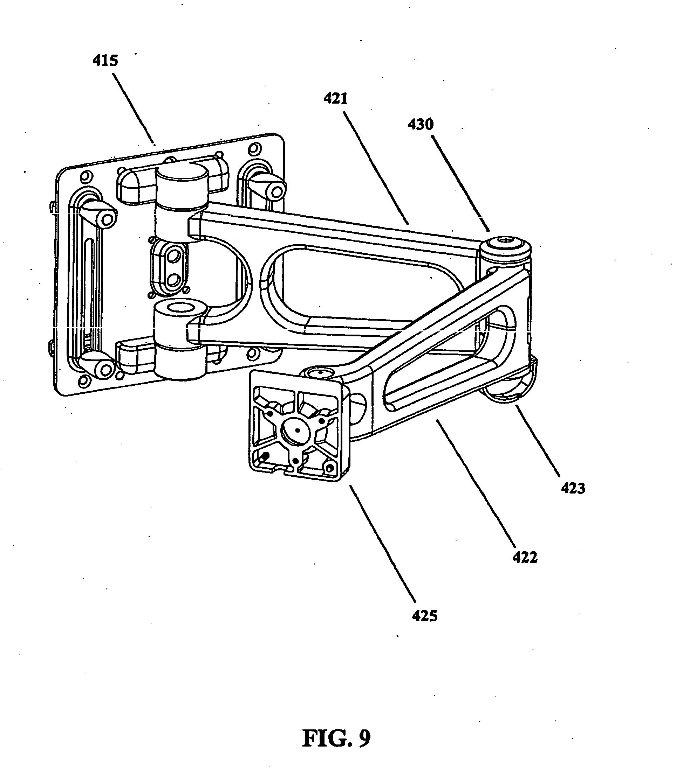

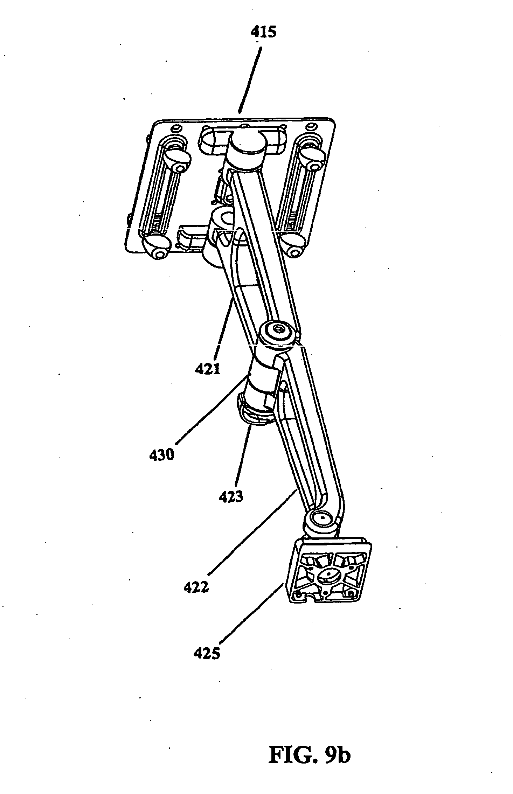

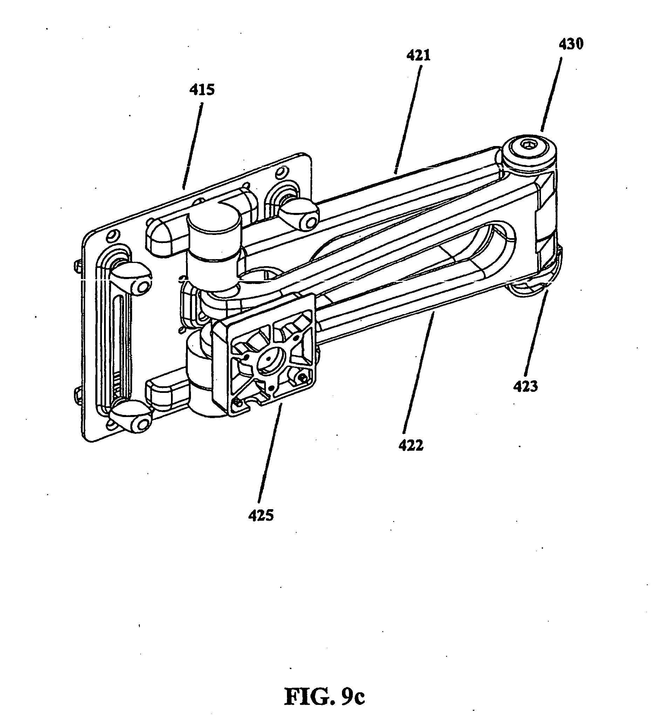

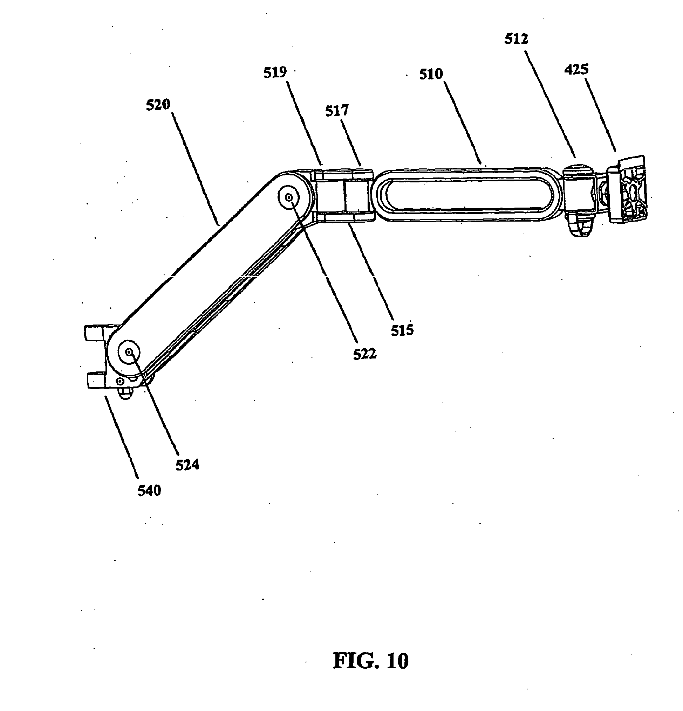

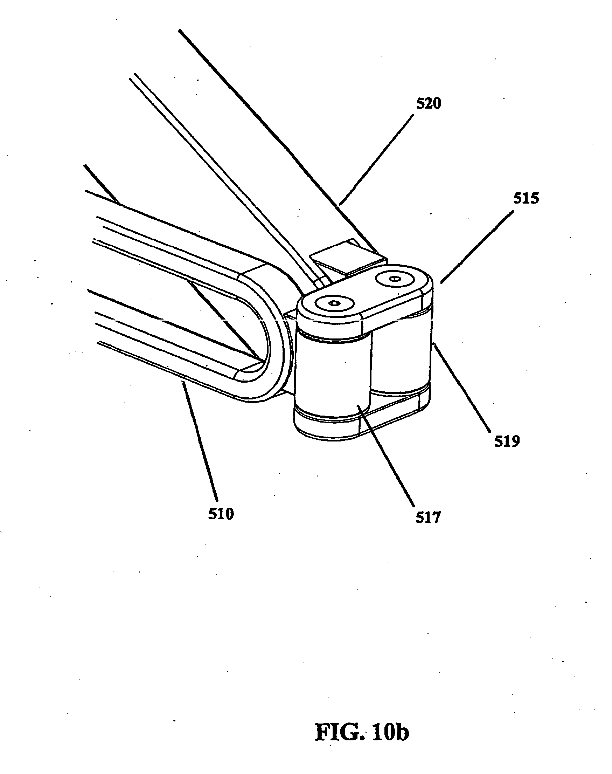

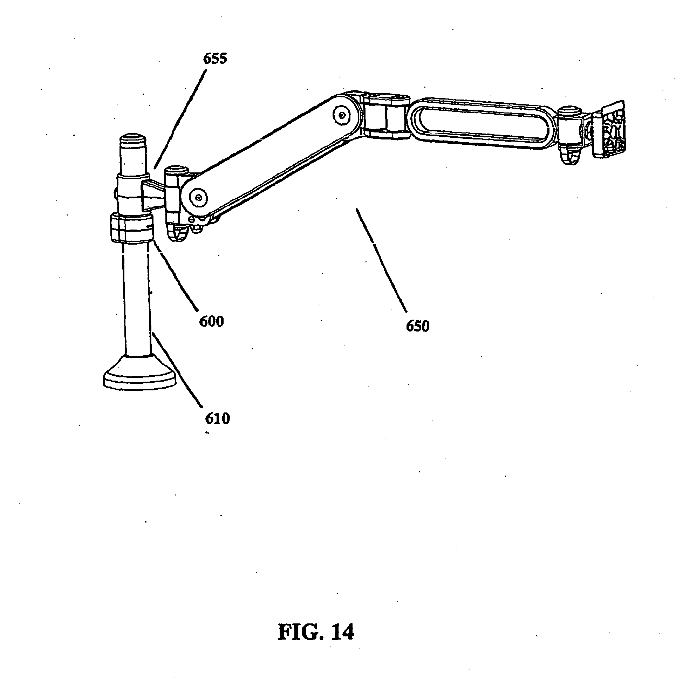

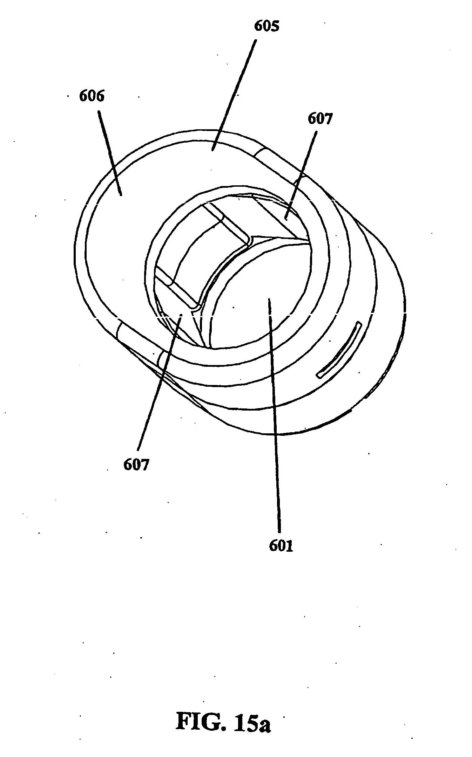

More particularly, Figs. 1-7b illustrate front end height adjustment mechanisms (FEA mechanisms) suitable for use on a device support arm, which device support arm can be attached to a post and maintained in position on the post by the bracket of the present invention. Figs. 8-8l illustrate various different configurations for a device support arm attached to a post, which device support arm is capable of being maintained in position on the post by the bracket of the present invention. Figs. 9-9c illustrate another device support arm capable of attachment to a post so as to be maintained in position on the post by a bracket according to the present invention. Figs. 10-13 illustrate yet another device support arm capable of attachment to a post so as to be maintained in position on the post by the bracket of the present invention, as shown in Fig. 14. Figs. 15a-15b illustrate an embodiment of bracket in accordance with the present invention. The individual drawings are described in more detail below.

### BRIEF DESCRIPTION OF THE DRAWINGS

Figure 1 is a partially exploded front perspective view of a front end height adjustment mechanism;

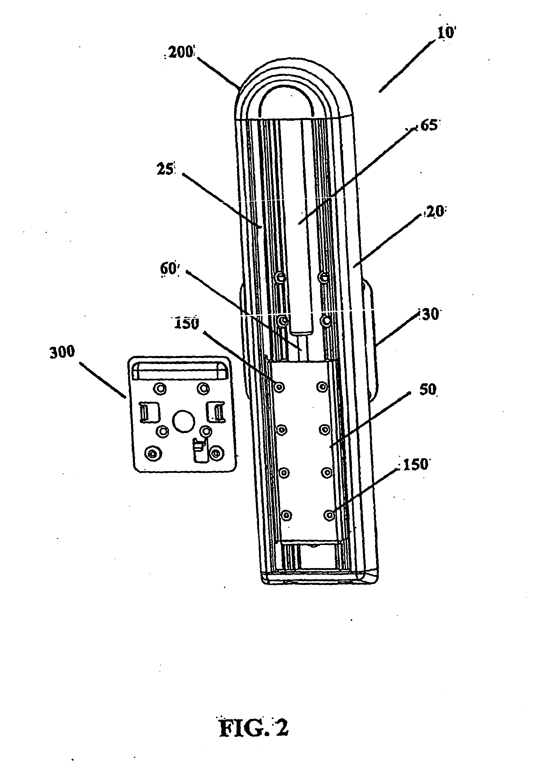

Figure 2 is a partially exploded rear perspective view of a front end height adjustment mechanism;

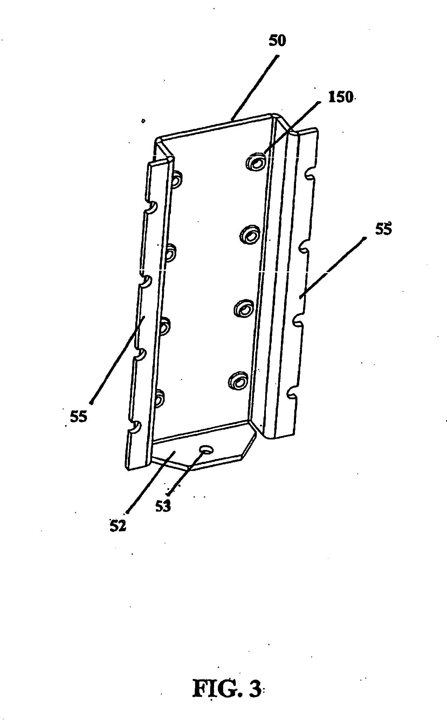

Figure 3 is a perspective view of a slide bracket for use in a front end height adjustment mechanism;

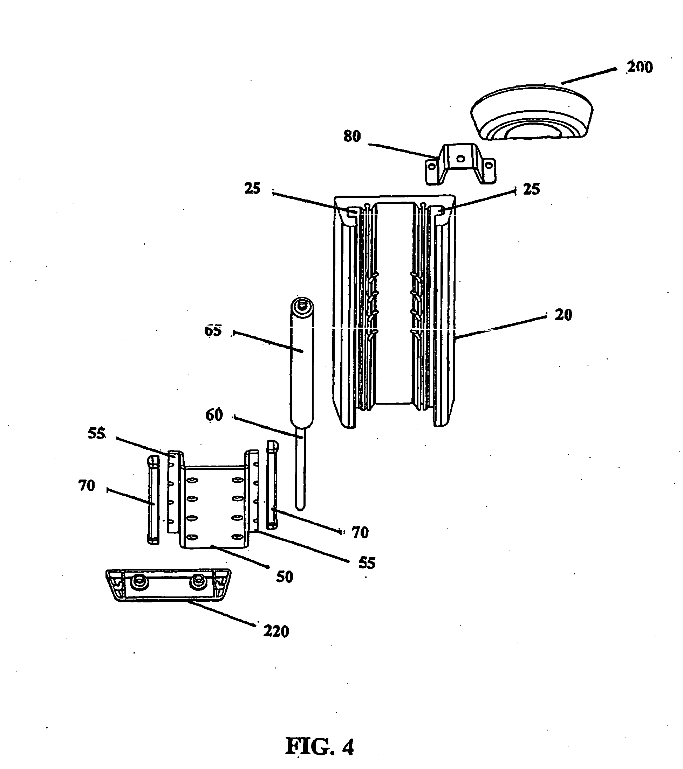

Figure 4 is a partially exploded top view of a front end height adjustment mechanism;

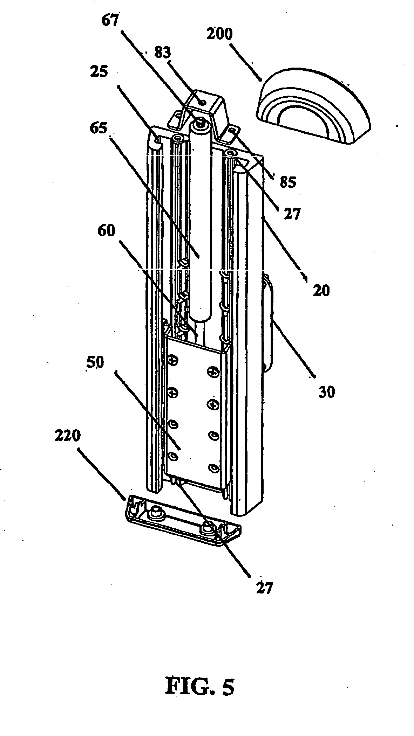

Figure 5 is a partially exploded top rear perspective view of a front end height adjustment mechanism;

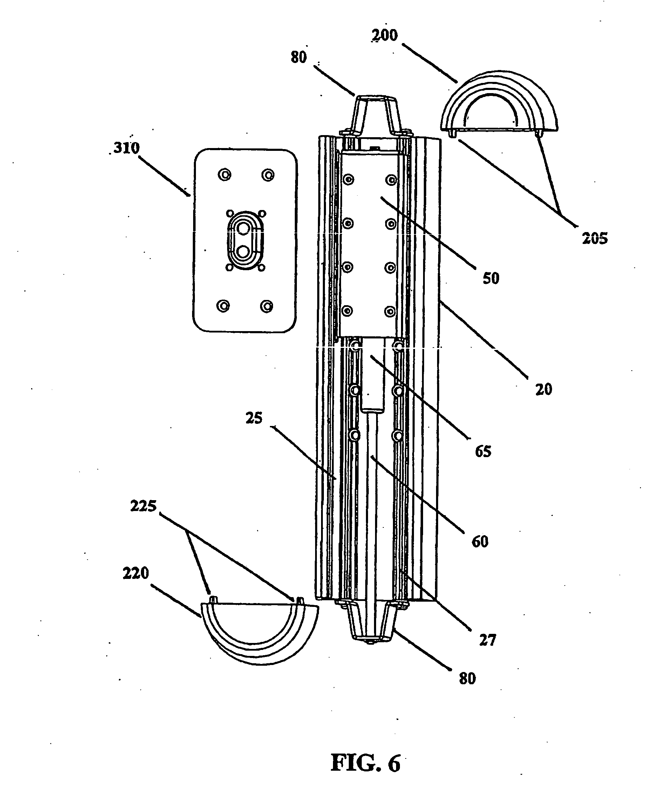

Figure 6 is a partially exploded rear perspective view of a front end height adjustment mechanism;

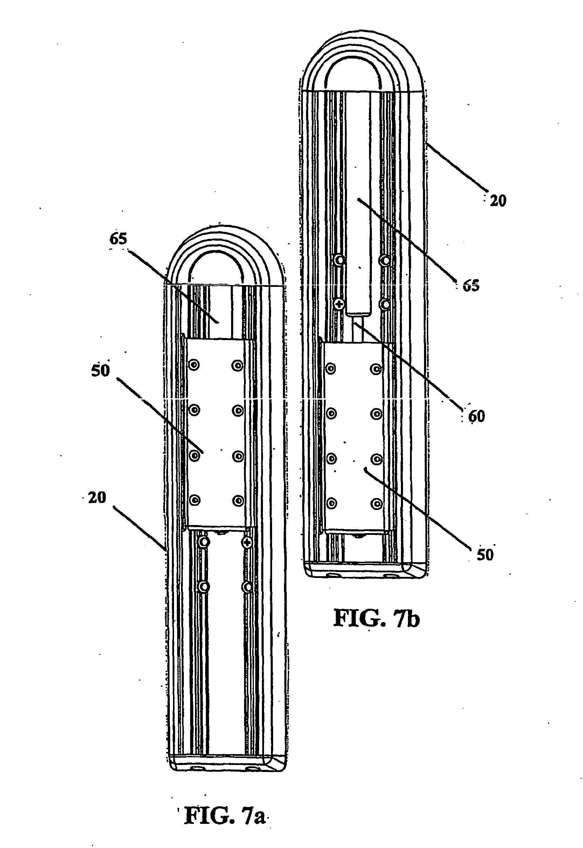

Figure 7a is a rear perspective view of the front end height adjustment with the gas spring retracted and the sliding bracket in an up position;
Figure 7b is the same view provided in Figure 7a but with the gas spring extended and the sliding bracket in a down position;
Figure 8 is a perspective view of a device support arm on a post useful for supporting the FEA of Figures 1-7b;
Figures 8a-8l are various different configurations for the device support arm illustrated in Figure 8;
Figure 9 is a perspective view of a device support arm suitable for use with the bracket of the invention;
Figure 9b is a top view of the device support arm of Figure 9, wherein the arm is fully extended;
Figure 9c is a perspective view of the device support arm of Figure 9, wherein the arm is fully folded;
Figure 10 is a side view of a different device support arm, also suitable for use with the bracket of the invention;
Figure 10b is a detail view of the dual pivot attachment of the device support arm according to Figure 10;

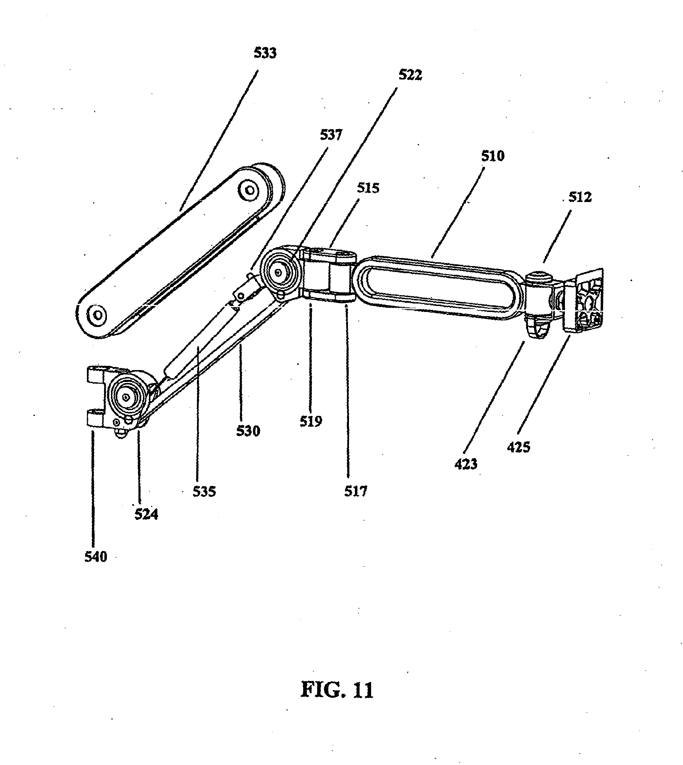

Figure 11 is a partially exploded perspective view of the device support arm according to Figure 10;

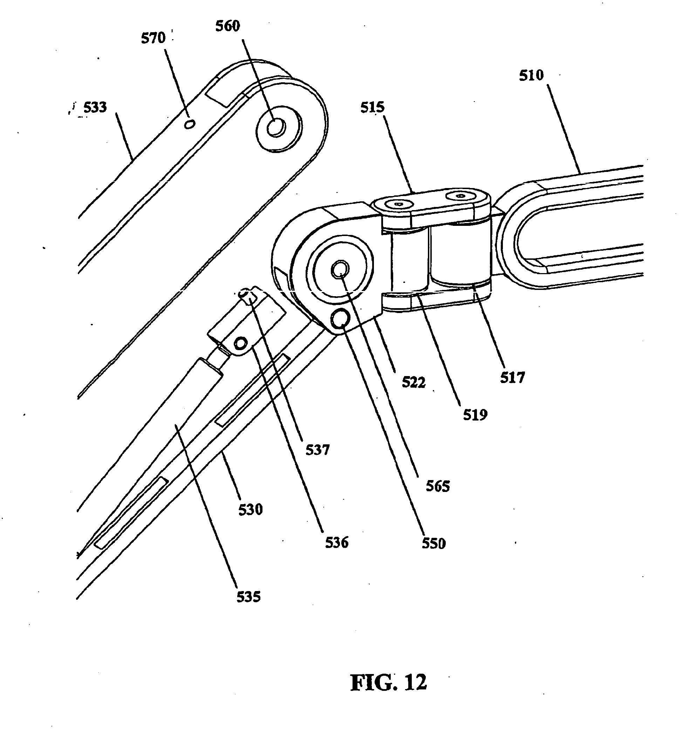

Figure 12 is a partially exploded detailed view of the device support arm according to Figure 10 and illustrating the linkage between the parallelogram arm and the horizontal arm;

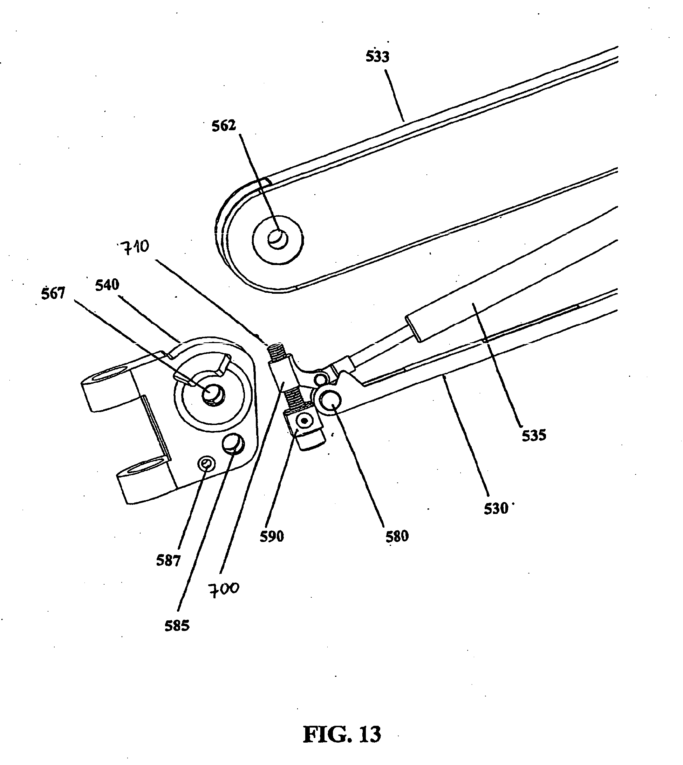

Figure 13 is a partially exploded detailed view of the device support arm according to Figure 10 and illustrating the linkage between the parallelogram arm and the support attachment bracket;
Figure 14 is a perspective view of the device support arm of Figures 10-13 shown attached to a post and maintained in position on the post by an embodiment of the knobless bracket of the invention;
Figure 15a is a top perspective view of the knobless bracket of Figure 14; and

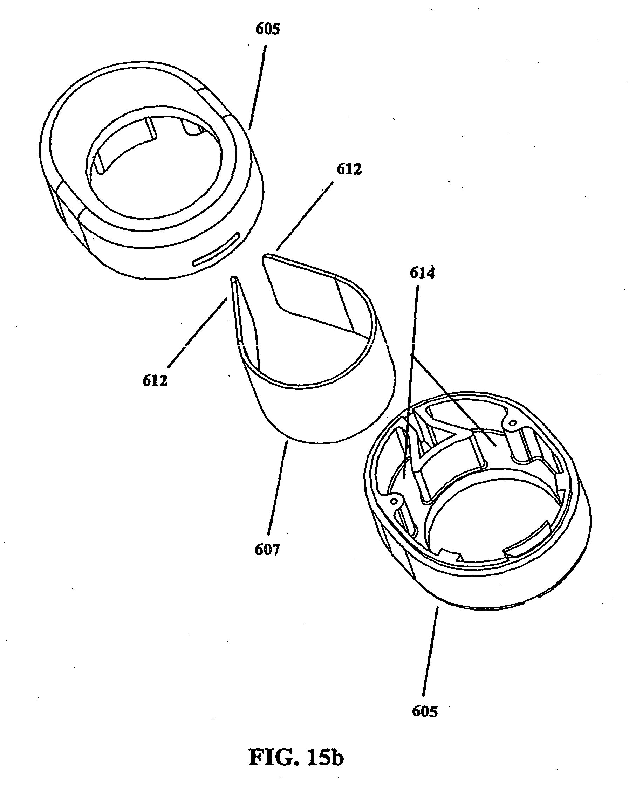

Figure 15b is an exploded view of the knobless bracket shown in Figure 15a.

### DETAILED DESCRIPTION OF THE INVENTION

The present invention now will be described more fully hereinafter with reference to the accompanying drawings. Figures 14, 15a and 15b illustrated a preferred embodiment of the invention. This invention may, however, be embodied in many different forms and should no be construed as limited to the embodiment set forth herein; rather, the embodiment is provided so that this disclosure will be thorough and complete, and will fully convey the scope of the invention to those skilled in the art.

In the drawings like numbers refer to like elements throughout.

There are illustrated mechanisms generally useful for facilitating positional adjustment of a variety of attached devices. The mechanisms are particularly useful for positional adjustment of different devices associated with electronic media input and output. In one arrangement, a display device, such as a video display (e.g., a flat-screen monitor), can be attached to the mechanisms. In further arrangements, input devices, such as a touchscreen, can be attached to the positional adjustment mechanisms. Further, the mechanisms are useful for attachment thereto of a support, such as for supporting a computer keyboard, a laptop computer, a personal DVD player, or other input, display, or combination device.

For simplicity, the following description is in terms of allowing for positional adjustment of a display device, such as a television or flat screen monitor. It is understood, however, that the apparatus also encompasses positional adjustment of multiple other devices that could be easily attached to the mechanisms described herein. Accordingly, any description of the mechanisms in term of positional adjustment of a display device or monitor is not intended to be limiting to specific devices but is rather intended to generally describe the ability of the mechanisms to be used with a wide variety of devices.

Figures 1-7b illustrate a front end height adjustment mechanism. The FEA mechanism is preferably formed for attachment at a front-facing surface to a device, such as a display device, and is formed for attachment at a back-facing surface to a support, such as a wall structural member, mounting pole, display arm, or other similar structural support. The FEA mechanism is vertically aligned and includes motion regulating components internal to the structure that allows for adjustment of the attached display device in a vertical plane (i.e., height adjustment).

One front end height adjustment mechanism is provided in Figure 1, which shows a partially exploded front perspective view of the FEA mechanism. As seen in this figure, the FEA 10 externally mainly comprises a track apparatus 20, which further functions generally as an external functional and decorative covering for the FEA 10. Additionally provided on the front portion of the FEA 10 are a plurality of device mounting apertures 23, which allow for variable attachment of the desired device, such as a video display, at different vertical positions along the FEA. In the FEA of Figure 1, eight device mounting apertures are provide, four of the eight generally being used for attachment of the display device. Accordingly, in this FEA, three different mounting positions are provided (i.e., the top two rows of apertures, the middle two rows of apertures, or the bottom two rows of apertures).

The display device can be mounted directly to the track 20 of the FEA 10 via the device mounting apertures 23. Alternately, the FEA can include a device mounting bracket 30, which can be attached via the device mounting apertures 23, again, at various positions. In Figure 1 the mounting apertures 23 are centrally located along the length of the FEA 10. Such positioning is intended to optimize height adjust in both the upward and downward positions. The mounting apertures 23, or further mounting apertures, could, however, be placed higher or lower on the FEA 10 as desired to maximize either upward or downward positioning. Therefore, the mounting bracket 30 could be attached to the track apparatus 20 at any position along the length of the track apparatus 20.

Optionally, the FEA 10 can further include one or more additional mounting components for increasing the spacing between the display device and the FEA 10. For example, a spacer bracket 40 can be used. Ideally, the spacer brackets and the mounting brackets used are interchangeable such that the spacer bracket could be attached directly to the FEA and the mounting bracket attached to the spacer bracket. Further, a variety of spacer devices could be used.

Preferentially, the mounting bracket 30 (or the spacer bracket, in appropriate embodiments) is substantially standardized such that video displays generally available on the market are readily attachable to the FEA 10. In other words, it is preferred for the mounting bracket 30 to have a mounting hole pattern that is sized for easy mounting of a variety of input devices, display devices, and apparatuses for supporting such devices.

Preferably, mounting bracket 30 (or the spacer bracket, if more external to the mechanism) is VESA® compliant. The Video Electronics Standards Association (VESA®) is an organization of technology based companies proposing standards for the video electronics market. One standard for mounting attachment of video displays is the VESA® Flat Display Monitor Interface standard or VESA® FDMI™. The VESA® FDMI™ Standard defines mounting interfaces, hole patterns, and associated cable/power supply locations for LCD monitors, plasma displays and other flat panel devices. Under this standard, VESA® compliant video displays are equipped with either a 75 x 75 mm mounting hole pattern or a 100 x 100 mm mounting hole pattern. Further, VESA® compliant mounting patterns may be found on other types of devices that could also be beneficially attached to the FEA mechanism for improving ergonomy related to vertical positioning of the attached device.

As seen in Figure 1, the display bracket 30 has four inner holes 33 and four outer holes 36. The inner holes 33 are size to correspond to the device mounting apertures 23 on the FEA 10. The outer holes 36 are according to a 75 x 75 mm mounting hole pattern. Similarly, the spacer bracket 40 has four inner holes 33 and four outer holes 38. The outer holes 38 are according to a 100 x 100 mm mounting hole pattern. Alternately, the display bracket could have a 100 x 100 mm mounting hole pattern, and the mounting bracket could have a 75 x 75 mm mounting hole pattern, depending upon the particular need to be fulfilled by the mechanism. Accordingly, the FEA mechanism can be customized for attachment to multiple standardized mounting protocols and can include additional adapters, such as the spacer bracket, for increasing the possible mountings. The FEA mechanism, being VESA® compliant, is readily adaptable for attachment to a large number of video displays.

Further components of the front end height adjustment mechanism are illustrated in Figure 2, which shows a partially exploded rear perspective view of the FEA 10. As seen, the track apparatus 20 has a substantially open interior for housing the further components of the FEA mechanism 10. Particularly seen in this view are the slide bracket 50 and the motion regulating device, which, in this arrangement, is a compression gas spring. The slide bracket 50 is connected to the lower end of the compression gas spring shaft 60, such connection being capable of bearing a sufficient weight to accommodate attached devices, such as flat screen monitors. Preferably, the slide bracket 50 is attached to the compression gas spring shaft 60 via a screw, bolt, rivet, weld, or the like. In one particular arrangement, shown in Figure 3, the slide bracket 50 has a flange 52 with an aperture 53 for receiving a matching end of the compression gas spring shaft 60. In one arrangement, the aperture 53 is threaded for receiving a threaded end of the compression gas spring shaft 60. In another arrangement, the gas spring shaft 60 includes a pin for insertion into the aperture 53 in the slide bracket flange 52 that is held in place with a retaining clip.

Further illustrated in Figure 2 is a ball joint support mounting plate 300, which is optionally included in the FEA. The ball joint support mounting plate 300 is only one type of mounting plate that could be used with the FEA. Various support mounting plates could be used depending upon the support to which the FEA is to be attached. The support mounting plate can be attached directly to the sliding bracket 50, such as by using screws, bolts, rivets, pins and clips, or the like, through interaction with sliding bracket apertures 150. As seen in Figure 2, the sliding bracket 50 includes eight sliding bracket apertures in this arrangement. This again allows for varying the range of height adjustment with the FEA by varying the height at which the FEA attaches to the support.

The slide bracket 50 is maintained in the track 20 through interaction with the track channels 25. Figure 4 shows a partially exploded top perspective view of the FEA mechanism 10. Visible in this view is the shape of the slide bracket 50, particularly being characterized as U-shaped, and having side flanges 55 for interacting with track channels 25. In further arrangements, the slide bracket can be characterized as being C-shaped or, alternately, as being generally flat.

The side flanges 55 fit into the track channels 25, and the slide bracket 50 moves up and down the track 20, with the side flanges 55 moving freely along the track channels 25. To facilitate the free movement of the slide bracket 50 through the track 20, there may be included friction reducers, such as track glides 70, which conveniently fit over the outer edges of the side flanges 55, acting as a buffer between the side flanges 55 and the track channels 25. Desirably, the track glides 70 comprise a low friction material, or are coated with a low friction material, such as polytetrafluorethylene (PTFE), Teflon™, polyethylene, fluorinated ethylenepropylene copolymer (FEP), perfluoroalkoxy (PFA), or the like. Other methods for facilitating the movement of the slide bracket 50 along the track channels 25 may be used. For example, the side flanges 55 could be equipped with bearings for allowing roller movement through the track channels 25. Further friction reducing agents could also be used with the various embodiments of the invention. For example, lubricants could be used in the track channels 25 to further facilitate free movement of the slide bracket 50 up and down the track 20.

Desirably, the slide bracket moves freely along the track channels up and down at least a partial length of the track apparatus. Such free movement provides for smoothness of operation during height adjustment; however, unfettered movement of slide bracket would not allow for positional stability at a given height. Accordingly, the front end height adjustment mechanism further comprises a motion regulating device.

In one arrangement, as shown in Figure 2, the motion regulating device is a compression gas spring, which comprises a gas spring shaft 60 and a gas spring chamber 65. Gas springs provide controlled and smooth lifting assistance for adjusting the height of a video display. Gas springs are particularly preferred because they are compact and lightweight, and a single gas spring can handle weights of to 27kg (60 lbs), which is well within the range of weights of most video displays.

The use of gas springs as the motion regulating device is further advantageous because various gas springs can be employed to make the FEA mechanism adaptable to a number of different devices of different weights and sizes. Various compression gas springs are available allowing the mechanism to be customized based on the use of springs having different stroke lengths and different weight ratings. Accordingly, the front end height adjustment mechanism can encompass a number of arrangements wherein the FEA is particularly rated for use with devices having weights falling within a plurality of variable ranges. For example, in one arrangement, the FEA may be rated for handling devices with weights up to about 9kg (20 pounds). In another arrangement, the FEA may be rated for handling devices with weights up to about 18kg (40 pounds). Various similar arrangements having different weight ratings are also envisaged.

The front end height adjustment mechanism is further adaptable to use in different settings, and with a variety of devices, in that the FEA mechanism can be made in a variety of lengths to provide various ranges of adjustment. When a compression gas spring is used as the movement regulating device, the overall length of the front end height adjustment mechanism can be based upon the stroke length of the gas spring. Preferably, the gas spring has a stroke length of about 50mm (2 inches) to about 254mm (10 inches) more preferably about 76mm (3 inches) to abou 229mm (9 inches) most preferably about 102mm (4 inches) to about 203mm (8 inches). In one arrangement, a compression gas spring having a stroke length of about 152mm (6 inches) is used. Such a spring would generally have an overall length of about 305mm (12 inches). The front end height adjustment mechanism is particularly advantageous due to its compact nature. Accordingly, a front end height adjustment mechanism using a compression gas spring having an overall length of about 305mm (12 inches) would have a final overall length of about 305-330mm (12-13 inches).

Generally, when a gas spring is used as the motion regulating device, the FEA mechanism need only be of a length approximately equal to the maximum extended length of the gas spring. In one arrangement, a decorative top cap is attached to the top portion of the track. In addition to decoration, the top cap can also function as a grip or handle for moving the FEA to adjust the height of the attached device. In another arrangement, the FEA also includes a decorative bottom cap attached to the bottom portion of the track.

The compact design of the FEA is desirable in that it is easily incorporated into a minimalistic setting that is often required in work areas employing space saving equipment, such as flat screen computer monitors. Given the compact nature of the front end height adjustment mechanism, it easily attaches to the back portion of a video display, is generally smaller in overall height than the video display to which it is attached, and allows for height adjustment without taking up valuable work space. The overall length of the front end height adjustment mechanism can be greater or smaller than the example above to accommodate movement regulating devices of different sizes. Accordingly, when the FEA mechanism has a shorter overall length, it would be expected that the range of height adjustment would be lessened, and when the FEA mechanism has a greater overall length, it would be expected that the range of height adjustment would be increased.

In part, the effectiveness of the front end height adjustment mechanism arises from its basic construction. As can be seen in Figures 2-5, the FEA comprises a track 20, a sliding bracket 50, and a gas spring, which includes a gas spring shaft 60 and a gas spring chamber 65. The sliding bracket 50 moves along the track channels 25. The sliding bracket 50 is fixedly attached at a bottom flange 52 to the bottom end of the gas spring shaft 60. The gas spring is fixedly attached to an upper portion of the track 20 via attachment of the upper end of the gas spring chamber 65 to a mounting strap 80. The gas spring could also be inverted.

In one arrangement, as shown in Figure 5, the top portion of the gas spring chamber 65 is fixedly attached to the mounting strap 80, such as with a pin 67 at the top surface of the gas spring chamber 65 through an aperture 83 in the mounting strap. The mounting strap 80 is further attached to an upper portion of the track 20 by commonly used attachment methods, such as bolts, pins, screws, or the like. In the arrangement shown in Figure 5, the mounting strap 80 is attached to the track 20 at apertures 27, which run the length of the track and provide attachment points at the top and bottom ends of the track 20. Various different methods of attaching gas spring chamber 65 to track apparatus 20 could be used.

Decorative top cap 200 attaches to the top portion of the track 20. Such attachment can be through any conventional means. In one arrangement, the top cap 200 includes clips sized and positioned for insertion into the track channels 25. The pins can be sized to "snap" into place, thus forming a secure attachment. Secure attachment of the top cap can also be facilitated by forming the interior of the cap to tightly interact with the mounting strap 80. Similarly, the bottom cap 220 is attached to the bottom of the track 20 by any conventional means. In one arrangement, the bottom cap 220 is attached to the track 20 by screws that interact with the bottom end of the apertures 27.

Another arrangement of FEA is provided in Figure 6, which shows a rear perspective view of the FEA. In this arrangement the sliding bracket 50 still moves along track channels 25 but is arranged such that the sliding bracket flange (not shown in Figure 6) is at the top of the sliding bracket 50. The sliding bracket 50 attaches to the top portion of the gas spring chamber 65. The bottom portion of the gas spring shaft 60 attaches to a mounting strap 80, which in turn attaches to the track 20. In this arrangement, the mounting strap 80 attaches to the track with screws that interact with the track apertures 27. The gas spring could also be inverted.

In the arrangement of Figure 6, a second mounting strap 80 is attached to the top portion of the track 20, and the presence of the mounting strap 80 is beneficial for facilitating secure attachment of the top cap 200 to the track 20. As seen in Figure 6, the top cap further includes clips 205 for interacting with the track channels 25 to additionally secure the top cap 200 to the track 25. In this arrangement, the bottom cap 220 is similarly shaped as the top cap 200 and also includes clips 225 for facilitating attachment of the bottom cap 220 to the track 25. Again, the bottom cap 220 is preferentially structured internally to interact with the mounting strap 80 to further secure the bottom cap 220 to the track 20.

Also illustrated in Figure 6 is a knuckle support mounting plate 310, which is particularly designed for attachment of the FEA to a support arm having an end for receiving the protruding element of the support mounting plate 310. As previously noted, multiple various support mounting plates can be used.

In addition to the compression gas spring, additional motion regulating devices can be used in the front end height adjustment mechanism. For example, the slide bracket could be attached to a simple screw mechanism that is mounted in the track apparatus such that manual adjustment of an actuator causes upward or downward movement of the attached video display. Further, the slide bracket could be allowed to move freely along the track apparatus and be externally second in a given position with a friction generating mechanism, such as a bolt that can be manually tightened or loosened. Other methods of securing the slide bracket in a given position are also encompassed. For example, the track apparatus could have an incremental series of slots for receiving a projection from the slide bracket. Further, the gas spring could be replaced by a slide brake that includes a handle for releasing the brake temporarily to allow for upward or downward movement of the attached device.

The front end height adjustment mechanism is particularly adaptable for use in a variety of work or personal environments. As previously illustrated, the slide bracket is formed for attachment to a support device, either directly or through use of an additional support mounting bracket. Further, as previously illustrated, the FEA is formed on its front face for attachment of an input or display device, such as a video display, either directly or through the use of one or more display bracket and, optionally, a spacer bracket. Once attached to a support device and a desired input or display device the front end height adjustment mechanism allows the user to easily adjust the height of the video display.

The unique design of the front end height adjustment mechanism allows for both static and dynamic height adjustment. As previously noted, the front face of the FEA is formed with multiple apertures allowing for attachment of a device, such as a video display, at variable positions. Similarly, the sliding bracket is also formed with multiple apertures for attachment to a support device at variable positions. Accordingly, the FEA is capable of facilitating attachment of an input or display device to a support over a range of heights. The FEA generally provides for static height adjustment over a range of up to about 152mm (6 inches). In one particular arrangement, the FEA provides static height adjustment over a range of up to about 127 mm (5 inches). Such static height adjustment is generally incremental based upon the spacing of the apertures on the front face of the track of the FEA and on the sliding bracket of the FEA.

In addition to the static height adjustment, the FEA also provides a user with dynamic height adjustment of the device attached to the FEA. As described in relation to the motion regulating device component of the FEA mechanism, dynamic height adjustment depends upon the type of motion regulating device used and the individual specifications of the motion regulating device. The FEA generally provides for dynamic height adjustment over a range of up to about 203mm (8 inches). In one particular arrangement, the FEA provides for dynamic height adjustment over a range of up to about 152mm (6 inches). Preferably, the dynamic height adjustment is continuous throughout the specified range.

The dynamic height adjustment provided by the front end height adjustment mechanism is illustrated by Figure 7a and Figure 7b, both of which show one arrangement of FEA incorporating a gas spring as the motion regulating device. In Figure 7a, the gas spring is retracted (only the gas spring chamber 65 being visible), and the sliding bracket 50 is in an up position, being at the top portion of the track 20. In Figure 7b, the gas spring is extended (the gas spring shaft 60 now being visible), and the sliding bracket 50 is in the down position, being near the bottom of the track 20. Assuming the sliding bracket is attached to a stationary support and a display device is attached to the front of the FEA, the attached display device would be in a lowered position according to Figure 7a and would be in a raised position according to Figure 7b.

The front end height adjustment mechanism can be used in association with further positional adjustment mechanisms. One such mechanism that is particularly useful in combination with the FEA is a device support arm. Device support arms (sometimes referred to as monitor arms) are useful in that they allow for positioning a display device (or an input device) some distance away from the support attachment point. This can be useful, for instance, to position the device away from obstacles, such as overhead shelving or other desktop items. Depending upon the monitor arm used, the attached device can be positioned at distances more than two feet away from the support attachment point. Furthermore, by including the FEA, the height adjustment mechanism remains directly behind the supported device, thereby providing for ease of height adjustment without requiring detachment and reattachment of any parts.

Preferentially, device support arms, in addition to allowing positioning away from the support attachment point, allow for lateral movement of the attached device, as well as depth adjustment. Furthermore, the monitor arms can also allow for further vertical positioning of the attached device.

A device support arm particularly useful with the FEA is illustrated in Figure 8. The support arm generally comprises a post 405, a gas cylinder 410, a mounting piece 415, one or more arm links 420, and a device attachment bracket 425. The support arm, particularly when used in combination with the FEA of the invention, provides effortless, three-dimensional adjustment to provide ideal positioning of various monitors and input devices for a number of different tasks and users. The support arm shown in Figure 8 is available from Humanscale and is manufactured under the designation M7 Flat Panel Monitor Arms.

Various alternate arrangements of the support arm shown in Figure 8 are also possible. In fact, the support arm is distinctive in its ability to be customized to meet a variety of device attachment needs. The support arm is thus capable of meeting a number of specific needs, including quick release, security, touchscreen attachment, rotation stop, and other special applications.

The support arm, as shown in Figure 8, is characterized by a design that blends high functionality with pleasing aesthetics. The post design of the support arm maximizes space savings by occupying less space over a work surface, such as a desk. The post 405 provides for vertical adjustment of the support arm by moving within the gas spring 410. The gas spring allows for height adjustment with finger-touch movement, which minimizes risk of strain or other injury commonly associated with moving heavy object, such as monitors. The gas spring 410 is available in multiple options to support various monitor weights.

The length of the post 405 and the stroke of the gas spring 410 can vary such that varying distances of dynamic adjustment are available. In one particular arrangement, the post length and gas spring stroke are such that up to 203mm (eight inches) of dynamic height adjustment is provided. When used in combination with a FEA as described dynamic height adjustment up to about 406mm (16 inches) can be provided. Such a range of dynamic adjustment allows a user to easily position an attached monitor for optimal comfort and ergonomic benefit relative the specific task being performed (e. g., leaning back, writing, or standing).

The support arm shown in Figure 8 is also customizable in the type of mounting piece 415 used with the support arm. As shown in Figure 8, the mounting piece 415 is a grommet style mounting piece. The various mounting options allow for quick and easy installation in any environment, such as attachment to a desk (including varying styles and thicknesses), counter, wall, or ceiling. The type of mounting piece used can affect dynamic adjustment and static adjustment of the support arm. For example, with the grommet style mounting piece, up to 203mm (eight inches) of dynamic height adjustment and up to 152mm (six inches) of static height adjustment are available in one arrangement. In another arrangement, the mounting piece is a clamp. In still another arrangement, the mounting piece is a ring bracket allowing direct attachment to a surface, such as with screws or bolts. In such arrangements, static height adjustment is generally unavailable, and dynamic height adjustment can be up to about 76 to 102 mm (three to four inches). In yet another arrangement, the mounting piece allows for attachment to a wall mounting surface, such as a slatwall configuration. In this arrangement, static adjustement is again 11 unavailable, and dynamic height ajustement can be up to about 76 to 102 mm (three to four inches).

As seen in the embodiment of Figure 8, the support arm can include one or more arm links 420. The arm links can vary in length. Preferentially, when a plurality of arm links are used, each arm link is of the same length. In one arrangement, the arm link has a length of about 203mm (eight inches). In another arrangement, the arm link has a length of about 305mm (12 inches). The combination of arm links generally allows for up to about 610mm (24 inches) of depth adjustment with the support arm. The arm links are interconnected in a pivotal connection that allows the combination of arm links to partially fold up on itself. This allows for even greater positional adjustment control, particularly depth adjustment. The arm links 420 also can include one or more cable guides 423 that provide built-in cable management means to secure the power cables (as well as other cables inherent to the various electronic devices that may be used with the support arm) near the support arm to avoid cluttering the work area, to protect the cables, and to further enhance the aesthetics of the device.

The arm links are further pivotally attached to the post 405 of the support arm. The pivotal attachment can be through a top mount attachment, such as shown in Figure 8, or through a bracket mount that allows for attachment of one or more arm links 420 at varying heights along the post 405.

The support arm shown in Figure 8 also further includes a device attachment bracket 425, which is pivotally attached to the arm link 420. As seen in Figure 8, the device attachment bracket 425 is a ball joint bracket that is a standardized 75 mm and 100 mm VESA bracket allowing for direct attachment of a monitor or input device. Other bracket types could be used to allow for attachment of even more devices. Further, the device attachment bracket 425 is useful for attachment of a FEA mechanism of the type described earlier for facilitating even further height adjustment capability. The ball joint bracket design is particularly beneficial as it allows for up to a 60 degree range of monitor tilt (vertical or horizontal) for added adjustability. Further, the ball joint bracket allows for 360 degree monitor rotation to allow for either portrait or landscape viewing.

As previously noted, the support arm shown in Figure 8 can take on a variety of customizable configurations to accommodate a variety of users, use environments, and attached devices. Figures 8a through 8l illustrate various specific arrangements of the M7 monitor arm.

Figures 8a through 8f illustrate monitor arms wherein the arm links are attached to the pole through a top mount pivotal attachment. Figure 8a illustrates a monitor arm with one row of two standard length (203mm (eight inch)) arm links and a grommet style mount device. Figure 8b illustrates a monitor arm with one row of two long (305mm (twelve inch)) arm links and a clamp mount. Figure 8c illustrates a monitor arm with one long link, a slatwall mount, and a quick release tab on the ball joint bracket. Figure 8d illustrates a monitor arm with one row of two standard links on the left and two standard links on the right. The monitor arm further includes a grommet style mount device. Figure 8c illustrates a monitor arm with one row of arm links, comprising one standard arm link on the right and one standard arm link on the left. The monitor arm further includes a clamp mount. Figure 8f illustrates a monitor arm with one row of arm links comprising one long arm link on the right and one long arm link on the left. The monitor arm further comprises a slatwall mount.

Figures 8g through 8l illustrate monitor arms wherein the arm links are attached to the pole through a bracket mount pivotal attachment at some point along the length of the pole. Figure 8g illustrates a monitor arm with one row of two standard links and a clamp mount. Figure 8h illustrates a monitor arm with one row of arm links comprising one long arm link on the right and one long arm link on the left. The monitor arm further comprises a grommet style mount. Figure 8i illustrates a monitor arm with one row of arm links comprising two standard links on the right and two standard links on the left. The monitor arm further comprises a ball joint with no arm links attached to the pole and a direct mount ring bracket attachment device. Figure 8j illustrates a monitor arm with four sets of standard arm links at the same vertical position on the pole. The monitor arm further comprises a grommet mount. Figure 8k illustrates a monitor arm with two rows of two standard arm links and a clamp mount. Figure 8l illustrates a monitor arm with two rows of arm links comprising one standard arm link in each row on the right and one standard arm link in each row on the left. The monitor arm further comprises a slatwall mount.

Even further additional configurations in addition to those described above in relation to the monitor arm illustrated in Figures 8 through 8l are also possible. Moreover, other types of monitor arms may be used to facilitate the positional adjustment of an attached device, such as a monitor.

Figure 9 illustrates a device support arm adaptable for attachment at one end to a stationary support and adaptable for attachment at the opposite end to a device, such as a monitor or an input device. In Figure 9, the device support arm comprises a rear arm link 421, a front arm link 422, an offset pivot attachment 430 connecting the front arm link 422 to the rear arm link 421, a support attachment bracket 415 pivotally connected to the rear arm link 421, and a device attachment bracket 425 pivotally attached to the front arm link 422.

The unique offset pivot attachment 430 used to connect the front arm link 422 and the rear arm link 421 is particularly benefical in that it allows for folding of the device support arm from a fully extended position to a fully folded position wherein the device support arm is substantially flattened. Such movement is more clearly illustrated in Figures 9b and 9c.

The device support arm is shown fully extended in Figure 9c. In such a position, the device support arm is capable of supporting an attached device at a maximum distance away from a stationary support, to which the support attachment bracket 415 would be connected. In this position, the rear arm link 421 and the front arm link 422 are aligned in a straight line. The nature of the offset pivot attachment 430 is readily seen in Figure 9b, as the pivot attachment 430 is slightly offset from the alignment of the rear arm link 421 and the front arm link 422.

Previously known monitor arms have pivotal attachments between arm links that are substantially aligned with the individual arm links. Such alignment disallows full collapse of the arm links. In other words, when the arm is folded (in previously known monitor arms), the arms reach a point, at some distance prior to being fully folded such that the arm links are flat together, wherein the support arm can no longer fold. Such a limitation, however, is overcome by the device support arm of Figure 9.

As can be seen in Figure 9c, the design of the offset pivot attachment 430 allows the front arm link 422 to fully fold against the rear arm link 421 such that the front arm link 422 is positioned adjacent the rear arm link 421 in a substantially flattened state. This is highly beneficial in that it allows for a dramatically increased range of movement for a device attached to the device attachment bracket 425 that has heretofore not been achieved. Through use of this device support arm it is possible to allow for lateral adjustment and depth adjustment of an attached device. Accordingly, an attached device can be extended away from a stationary support the full length of the fully extended device support arm but can also be positioned out of the way, when desired, to be substantially flattened against the stationary support. This is possible due to the unique design and incorporation of the offset pivot attachment 430 in the device support arm.

The arm links themselves are characterized in that the rear arm link 421 is greater in length than the front arm link 422. The arm links can vary in length; however, it is preferable that the rear link be greater in length than the front link. This further enables the device support arm to fold upon itself to a substantially flattened state.

The offset pivot attachment 430 includes a locking mechanism such that when fully extended, the arm links are locked to prevent unintentional folding of the arm links. Mechanisms capable of providing such a locking function are known in the art, and any of such mechanisms are fully envisioned as useful. Particularly, the locking mechanism is internal to the offset pivot attachment and includes mechanism wherein a lock bar is biased to engage a lock recess. The biasing mechanism, such as a spring, provides sufficient force to prevent unintentional folding of the device support arm but is minimal enough to allow the lock bar to be disengaged from the lock recess by manual folding of the arm by a user. The monitor arm can further comprise one or more cable guides 423 for facilitating cable management.

As shown in Figures 9 through 9c, the rear arm link 421 is pivotally attached directly to the mounting piece 415. The mounting piece 415 is a slatwall mount. In other arrangements, the rear link 421 can be pivotally attached to additional mounting arm components to allow for even more positional adjustment of an attached device. For example, in one arrangement, the rear link 421 is pivotally attached to a pole, such as the post 405 illustrated in Figure 8. Such attachment could be through a top mount pivotal attachment (similar to that illustrated in Figures 8a through 8f. Furthermore, such attachment could be through a bracket mount pivotal attachment (similar to that illustrated in Figures 8g through 8l). Still further, such attachment of the device support arm to a post could be through other means, as described herein.

When the rear arm link is attached to a post, the post can be mounted directly to a support, such as through a slatwall mount or a ring mounting bracket. Furthermore, the mounting arm can include a gas spring component to allow for even greater control of the positional adjustement and to provide dynamic height adjustment capabilities. When a gas spring is used, mounting of the device support arm can be through various mounting pieces, similar to those illustrated in Figures 8a through 8l.

In one particular arrangement, the rear arm link 421 and the front arm link 422 illustrated in Figure 9 are incorporated into the monitor arm illustrated in Figure 8, replacing the arm links illustrated in Figure 8, or being used in addition to the arm links illustrated in Figure 8 to provide for attachment of a plurality of devices. Accordingly, the device support arm illustrated in Figure 9 can be described in terms similar to that described above in reference to the various embodiments of Figure 8, particularly relating to the ability to provide varying static and dynamic height adjustment, depth adjustment, lateral adjustment, rotational adjustment, and tilt adjustment.

As further shown in Figure 9, the device support arm also comprises a device attachment bracket 425. The device attachment bracket illustrated in Figure 9 is a ball joint bracket as described above in reference to Figure 8. Again, various additional brackets could be used to facilitate attachment of a number of different devices.

In a preferred arrangement, the device support arm of the embodiment shown in Figure 9 is attached to the FEA mechanism, and the monitor (or other device) is attached to the FEA. This can encompass various arrangements as the device support arm can take on various configurations as described above. Accordingly, varying levels of positional adjustment can be achieved. In particular, height adjustment is greatly facilitated (both static and dynamic), especially as provided for by the FEA.

In yet another arrangement, there is provided a device support arm that is particularly useful for facilitating positional adjustment of an attached device. As illustrated in Figure 10, the device support arm comprises a horizontal arm 510, a parallelogram arm 520, a dual pivot attachment 515 connecting the horizontal arm 510 to the parallelogram arm 520, a device attachment bracket 425 pivotally attached to the horizontal arm 510, and a support attachment bracket 540 pivotally attached to the parallelogram arm 520.

The device attachment bracket 425 is pivotally attached to the horizontal arm 510 at a horizontal arm front pivot 512. As shown in Figure 10, the device attachment bracket 425 is a ball joint type bracket with standardized VESA 75 mm and 100 mm attachment. Such attachment bracket is preferred for the versatility it provides with rotational and tilt adjustment, as well the ability to attach a large number of monitors or input devices. In particular, the device attachment bracket 425 is useful for attaching a FEA device.

The device support arm of Figure 10 is particularly characterized in that the horizontal arm 510 is attached to the parallelogram arm 520 with the dual pivot attachment 515. The dual pivot attachment 515 is unique in its ability to allow for rotation of the horizontal arm 510 in a horizontal plane through a range of approximately 360°. In other words, from a straight, fully extended position, the horizontal arm 510 can laterally pivot approximately 180° to the left and can laterally pivot approximately 180° to the right. Such range of motion is provided in that the dual pivot attachment 510 comprises a front horizontal pivot 517 attached to the horizontal arm 510 and a rear horizontal pivot 519 attached to the parallelogram arm 520, both pivots being in connection as part of the dual pivot attachment 515, and both pivots pivoting in the same plane.

The dual pivot attachment 515 is more clearly shown in Figure 10b, which provides a cut-away view of the device support arm in a folded position. As a comparative, Figure 10 shows the device support arm in an extended position. In Figure 10, the parallelogram arm 520, the horizontal arm 510, the rear horizontal pivot 519, and the front horizontal pivot 517, are aligned in the same vertical plane. In the folded position, as shown in Figure 10b, the horizontal arm 510 has pivoted 90° at the front horizontal pivot 517, and the dual pivot attachment 515 has pivoted 90° in the same direction at the rear horizontal pivot 519. Accordingly, the horizontal arm 510 has pivoted 180° from the extended position (Figure 10) to the folded position (Figure 10b). Identical movement to the opposite side of the device support arm is also possible.

The parallelogram arm 520 is attached (at its front portion), through a front parallelogram pivot bracket 522, to the rear horizontal pivot 519, and is further attached (at its rear portion), through a rear parallelogram pivot bracket 524, to the support attachment bracket 540. Various further attachments could also be used with the device support arm to allow for attachment to multiple different types of supports. In the arrangement shown, the support attachment bracket 540 is particularly adapted for attachment to a post (such as that illustrated in Figure 8). Furthermore, the support attachment bracket 540 can be attached directly to a mounting bracket (similar to the monitor arm illustrated in Figure 9). Still further, the parallelogram arm 520 could itself be directly attached to a different kind of mounting bracket for attachment to a support, such as a desk, a wall, or a modular-type support. Accordingly, the device support arm, as illustrated in Figure 10, can be incorporated into a variety of setups for facilitating positional adjustment of a viewing device, such as a monitor, or an input device.

Similar to the monitor arms described above, the device support arm illustrated in Figure 10 allows for three dimensional adjustment to provide ideal monitor positioning for different tasks and users. The device support arm can provide up to 610mm (24 inches) of depth adjustment, allows for dynamic height adjustment and static height adjustment, provides 360° monitor rotation for portrait or landscape viewing, and provides a 60 range of monitor tilt.

The device support arm of Figure 10 is further illustrated in Figure 11, which shows a partially exploded view of the parallelogram arm 520. As seen in Figure 11, the parallelogram arm comprises a lower arm bar 530 and an upper arm bar 533 (which also functions as a casing for the parallelogram arm to cover the moving components of the parallelogram arm and to protect from interference by, or injury to, a user during dynamic height adjustment of the monitor arm). The parallelogram arm further comprises a motion-regulating device that allows for dynamic movement of the monitor arm in a vertical direction but also functions to maintain a given vertical position once dynamic adjustment by a user has stopped. In the device support arm shown in Figure 11, the motion-regulating device is a gas spring 535. Preferably, the gas spring 535 is capable of load adjustment such that the device support arm can be easily modified to support devices over a varying range of weights. Preferably, the gas spring 535 is adjustable to hold devices having a weight of up to about 13,6kg (30 pounds).

The lower arm bar 530 of the parallelogram arm is pivotally attached to the front parallelogram pivot bracket 522 and is pivotally attached to the rear parallelogram pivot bracket 524. In one embodiment, the rear pivot bracket 524 and the support attachment bracket 540 are a single integral piece. The linkage between the horizontal arm 510, the horizontal pivot piece 515, the front parallelogram pivot bracket 522, the lower arm bar 530, and the upper arm bar 533 is shown in greater detail in Figure 12. As can be seen, the front parallelogram pivot 522 is attached to the rear horizontal pivot, thereby linking the horizontal arm 510 to the parallelogram arm 533. The front parallelogram pivot bracket 522 further comprises components for facilitating pivotal attachment of the lower arm bar 530 and the upper arm bar 533. The front parallelogram pivot bracket 522 comprises an aperture 565 for receiving an attachment device, such as a screw, bolt, or pin, for attachment of the upper arm bar 533. Accordingly, the upper arm bar 533 further comprises a pivot attachment aperture 560 through which the screw, bolt, pin, etc. can pass into the aperture 565 on the parallelogram pivot bracket 522. The front parallelogram pivot bracket 522 comprises an aperture for receiving an attachment device (such as a screw, bolt, or pin) to pivotally attach the lower arm bar 530 to the front parallelogram pivot bracket 522. As shown in Figure 12, the attachment device is a pin 550.

In Figure 12, the front end of the gas spring 535 appears for float free; however, in a fully constructed monitor arm the gas spring is actually attached to the upper arm bar 533, thereby facilitating a parallelogram linkage between the upper arm bar 533 and the lower arm bar 530. As can be seen in Figure 12, the gas spring 535 comprises a front gas spring bracket 536 pivotally attached to the front end of the gas spring 535. The front gas spring bracket 536 includes a pin 537 for interacting with an aperture 570 in the top surface of the upper bar 533, thereby attaching the gas spring 535 to the upper arm bar 533.

Figure 13 provides a more detailed view of the attachment of the parallelogram arm 520 to the support attachment bracket 540. In this embodiment, the upper arm bar 533 and the support attachment 540 have been moved out of their normal position to better reveal the underlying components. Additional components seen in this view include a gas spring attachment bolt 710 and a rear gas spring bracket 700. The gas spring 535 pivotally attaches to the rear gas spring bracket 700, which is adjustably positioned on the attachment bolt 710. In turn, the gas spring attachment bolt 710 is secured to the support attachment 540 with an attachment piece (such as a screw, bolt, pin, or the like) through an aperture 587 in the support attachment 540 and through an aperture in the bolt frame piece 590.

The lower arm bar 530 likewise pivotally attaches to the support attachment 540 with an attachment piece (such as a screw, bolt, pin, or the like) through an aperture 585 in the support attachment 540 and through an aperture in the lower arm bar 530. The upper arm bar 533 also attaches to the support attachment 540 with an attachment piece through an aperture 562 in the upper arm bar 533 and through an aperture 567 in the support attachment piece 540. Again, such attachment facilitates a parallelogram linkage between the upper arm bar 533 and the lower arm bar 530. Preferably, one or more spacer pieces, such as a washer, are used in the attachment of the upper arm bar 533 to the support attachment 540. Further preferably, an aperture lining, such as a bushing, is used in the aperture 567 in the support attachment to facilitate free movement of the parallelogram arm 520 during positional adjustment of the monitor arm.

The device support arm illustrated in Figures 10 through 13 is particularly useful for providing dynamic height adjustment of an attached device, such as a monitor or an input device. The length of the parallelogram arm and the horizontal arm can vary and thereby provide various arrangements wherein the range of height adjustment available can also vary. In one arrangement, the parallelogram arm has a length of about 254mm (10 inches). In another, the horizontal arm has a length of about 254mm (10 inches). In one particular arrangement, both the parallelogram arm and the horizontal have a length of about 254mm (10 inches). In this arrangement, the device support arm can provide up to abut 356mm (14 inches) of dynamic height adjustment. Further, depending upon the type of attachment (i.e., stationary, such as with a slatwall mount, or moveable, such as with a post and grommet mount), the device support arm can also provide up to about 152mm (6 inches) of static height adjustment.

Preferably, the device support arm illustrated in Figures 10 through 13 is used in combination with the FEA mechanism described earlier. In such a combination (particularly when the device support arm further includes a post with height adjustable mount), a maximum level of position adjustment is provided to a user with a variety of devices that can be attached to the FEA. In this arrangement, height adjustment is provided with the device support arm itself, but an additional distance of height adjustment is also provided by the FEA, which is optimally position directly behind the attached device, such as a monitor. For example, static height can be adjusted to a preferably range (in both the FEA and the monitor arm) depending upon the environment in which the monitor is being used. The FEA provides dynamic height adjustment (i. e., "fine tuning" height adjustment) over a range of about 152 mm (6 inches) whereby preferred height for a number of users can be obtained. Further, the device support arm offers additional height adjustment over a range of about another 356 mm (14 inches). In this combination, a preferred height for practically any environment and any use can be obtained with a single monitor attachment setup.

According to the invention, there is provided a knobless bracket useful for securing a device to a support post. In particular, the bracket of the invention is useful for securing a device support arm, such as those described herein, at a specific position vertically on a support post. The bracket is particularly useful for its sleek, compact design and ease of use. The bracket is capable of securing the device support arm at a specific height (i. e., disallows the arm from sliding down the post), and the height can be readily adjusted by gripping the bracket and sliding up or down the post. Accordingly, there is no need for bulky, obtrusive bolts, screws, switches, levers, knobs, or other additional adjustment facilitating devices. Rather, the adjustment is internal to the bracket. The function of the bracket is shown in Figure 14. In the embodiment shown therein, the knobless bracket 600 is positioned on a post 610. A device support arm 650 of the sort earlier described is attached to the post 610 with a free sliding bracket 655. The free sliding bracket 655 is prevented from sliding down the post by the presence of the knobless bracket 600. Accordingly, repositioning of the device support arm 650 on the post 610 is facilitated by squeezing the bracket and manually sliding the knobless bracket 600 and the free sliding bracket 655 (and necessarily the device support arm 650) to the desired height on the post 610.

In one embodiment of the invention, as illustrated in Figures 15a and 15b, the bracket comprises a compressible ring-shaped cover 605 having an oblong end 606 and having a central opening 601 extending through the cover. Internal to the cover 605 is a flattened steel spring 607 that is rounded such that that the two free ends 612 of the steel spring 607 are in close proximity to each other. The steel spring 607, while rounded, is substantially oblong shape. As visible in Figure 15a, the steel spring 607 is biased along the sides thereof toward the central opening 601 in the cover 605. Accordingly, when the bracket 600 is on a post (e. g., a post is extending through the central opening 601 in the bracket 600, as in Figure 14), the spring 607 presses against the post providing a gripping force directed toward the central opening 601, and subsequently against the post.

As seen in the exploded view of Figure 15b, the free ends 612 of the steel spring 607 fit into formed recesses 614 in the oblong end 606 of the cover 605. Compression of the oblong end 606 of the cover 605 provides pressure on the steel spring 607 forcing the steel spring 607 to take on a more rounded shape, therefore releasing the gripping force of the spring 607 on the post.

Preferably, the cover of the knobless bracket is comprised of a resilient material that is compressible to a degree necessary to the release the gripping force of the internal steel spring but rigid enough to resist damage. Alternately, the sides of the bracket can include sliding junction allowing the oblong end of the bracket to slide toward the opposite end of the bracket when compression is applied by a user. Other similar types of construction allowing for the function of the bracket, as described herein, are also encompassed by the invention.

As would be readily envisioned by one of skill in the art, the various mechanisms described herein are particularly useful in combination for providing functional, attractive support mechanisms that allow for easy position adjustment of attached devices. All combinations of the multiple mechanisms describe herein are therefore encompassed by the present invention.

Preferentially, the various components, including the FEA mechanism, as well as the various device support arm embodiments, are constructed generally out of a strong, lightweight material, such as aluminum. Various different materials could also be used, such as other metals or plastics.

Many modifications and other embodiments of the inventions set forth herein will come to mind to one skilled in the art to which these inventions pertain having the benefit of the teaching presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A bracket (600) for adjustably maintaining a device support arm (650) at a given position on a post (610), the bracket comprising:
a spring component (607), wherein said spring component (607) provides a gripping force;
and **characterised in that**:
the bracket (600) further comprises a compressible ring-shaped cover (605) having a central opening (601) therethrough and having an oblong end (606); and
the spring component (607) is contained within the cover (605); and
the spring component (607) provides a gripping force toward the central opening (601) in the cover (605), and wherein compression of the oblong end (606) of the cover (605) provides pressure on the spring component (607) forcing the spring component (607) to take on a more rounded shape, therefore releasing the gripping force of the spring component (607).

2. The bracket according to claim 1, wherein the spring component (607) comprises a flattened steel spring having two free ends (612), wherein the steel spring (607) is rounded such that the free ends (612) are in close proximity to each other.

3. A positional adjustment mechanism comprising:
a device support arm comprising:
a) a horizontal arm (510);
b) a parallelogram arm (520) comprising:
i) a lower arm bar (530),
ii) an upper arm bar (533) comprising an upper surface and two opposing side surfaces,
iii) a front parallelogram pivot bracket (522),
iv) a rear parallelogram pivot bracket (524), and
v) a gas spring (535) attached at one end to the lower arm bar and attached at the other end to the upper surface of the upper arm bar;
c) a dual pivot attachment (515) connecting the horizontal arm (510) to the parallelogram arm (520), said dual pivot attachment (510) comprising a front pivot (517) and a rear pivot (519), both pivots pivoting in the same plane;
d) a device attachment bracket (425) attached to the horizontal arm (510); and
e) a support attachment bracket (540) attached to the parallelogram arm (520); and the bracket (600) of claim 1 or claim 2.

4. The positional adjustment mechanism according to claim 3, wherein the dual pivot attachment (510) allows for 180° lateral movement of the horizontal arm (510) to either side of the device support arm.

5. The positional adjustment mechanism according to claim 3, wherein the device support arm is capable of folding at the dual pivot attachment (510) such that the horizontal arm (510) is positioned adjacent the parallelogram arm (520).

6. The positional adjustment mechanism according to claim 3, wherein the device attachment bracket (425) includes a plurality of standardized holes for attachment of a device.

7. The positional adjustment mechanism according to claim 3, wherein the support attachment bracket (540) is adapted for attachment to a post (610).

8. The positional adjustment mechanism according to claim 3, wherein the support attachment bracket (540) is integral with the rear parallelogram pivot bracket (524).

9. The positional adjustment mechanism according to claim 3, wherein the gas spring (535) is attached to the upper arm bar (533) by a pin (537) on the gas spring (535) interacting with an aperture (570) in the upper surface of the upper arm bar (533).

10. A positional adjustment mechanism comprising:
a device support arm comprising:
a) a front arm link (422);
b) a rear arm link (421);
c) an offset pivot attachment (430) having a single pivot axis and connecting the front arm link (422) to the rear arm link (421) such that when the support arm is fully extended, the front arm link (422) and the rear arm link (421) are aligned in a straight line with the pivot attachment (430) offset to one side;
d) a device attachment bracket (425); and
e) a support attachment bracket (415), wherein the rear arm link (421) is greater in length that the front arm link (422); and
the bracket (600) of claim 1 or claim 2.

11. The positional adjustment mechanism according to claim 10, wherein the support arm is capable of folding at the offset pivot attachment (430) such that the front arm link (422) is positioned adjacent the rear arm link (421).

12. The positional adjustment mechanism according to claim 10, wherein the device attachment bracket (425) includes a plurality of standardized holes for attachment of a device.

13. The positional adjustment mechanism according to claim 10, wherein the support attachment bracket (415) is adapted for attachment to a post.

14. The positional adjustment mechanism according to claim 10, wherein the offset pivot attachment (430) includes a mechanism for locking the support arm into an extended position.

15. A post (610) for supporting a device support arm (650), wherein the post (610) includes a bracket (600) according to claim 1 or claim 2.

## Patentansprüche

1. Klammer (600) zum verstellbaren Halten des Vorrichtungs-Haltearms (650) an einer vorgegebenen Position an einer Säule (610), wobei die Klammer ein Federelement (607) umfasst und das Federelement (607) eine Haltekraft bereitstellt,
**dadurch gekennzeichnet, dass**
die Klammer (600) eine kompressible ringförmige Abdeckung (605) mit einer durch sie führenden zentralen Öffnung (601) und einem länglichen Ende (606) umfasst,
dass sich das Federelement (607) in der Abdeckung (605) befindet
und dass das Federelement (607) eine Haltekraft in Richtung auf die zentrale Öffnung (601) in der Abdeckung (605) zur Verfügung stellt und wobei ein Zusammendrücken des länglichen Endes (606) der Abdeckung (605) Druck auf das Federelement (607) ausübt, wodurch das Federelement (607) gezwungen wird, eine eher rundliche Form einzunehmen, wodurch die Haltekraft des Federelementes (607) gelöst wird.

2. Klammer nach Anspruch 1, **dadurch gekennzeichnet, dass** das Federelement (607) eine abgeflachte Stahlfeder mit zwei freien Enden (612) umfasst, wobei die Stahlfeder (607) so gerundet ist, dass die freien Enden (612) in nächster Nähe zueinander stehen.

3. Mechanismus zur Positionsverstellung, umfassend:
einen Vorrichtungs-Haltearm umfassend:
(a) einen horizontalen Arm (510);
(b) einen Parallelogrammarm (520) umfassend:
i. einen unteren Armbalken (530),
ii. einen oberen Armbalken (533), der eine obere Oberfläche und zwei einander gegenüberliegende seitliche Oberflächen aufweist,
iii. eine vordere Schwenkklammer (522) für das Parallelogramm
iv. eine hintere Schwenkklammer (524) für das Parallelogramm, und
v. eine Gasfeder (535), die am einen Ende am unteren Armbalken und am anderen Ende an der oberen Oberfläche des oberen Armbalkens angebracht ist,
(c) eine doppelte Gelenkanordnung (515), die den horizontalen Arm (510) mit dem Parallelogrammarm (520) verbindet, wobei die doppelte Gelenkanordnung (515) ein vorderes Gelenk (517) und ein hinteres Gelenk (519) umfasst, und wobei beide Gelenke in der selben Ebene schwenken;
(d) eine Klammer (425) zum Anbringen einer Vorrichtung, die an dem horizontalen Arm (510) befestigt ist; und
(e) eine Klammer (540) zum Anbringen einer Halterung, die an dem Parallelogrammarm (520) befestigt ist; und
die Klammer (600) nach Anspruch 1 oder 2.

4. Mechanismus zur Positionsverstellung nach Anspruch 3, **dadurch gekennzeichnet, dass** die doppelte Gelenkanordnung (515) eine seitliche Bewegung des horizontalen Arms (510) um 180° nach jeder Seite des Vorrichtungs-Haltearms ermöglicht.

5. Mechanismus zur Positionsverstellung nach Anspruch 3, **dadurch gekennzeichnet, dass** der Vorrichtungs-Haltearm in der Lage ist, sich an der doppelten Gelenkanordnung (515) so zu falten, dass der horizontale Arm (510) angrenzend an den Parallelogrammarm (520) positioniert ist.

6. Mechanismus zur Positionsverstellung nach Anspruch 3, **dadurch gekennzeichnet, dass** die Klammer (425) zum Anbringen einer Vorrichtung eine Mehrzahl standardisierter Löcher für das Anbringen einer Vorrichtung aufweist.

7. Mechanismus zur Positionsverstellung nach Anspruch 3, **dadurch gekennzeichnet, dass** die Klammer (540) zum Anbringen einer Halterung an einer Säule (610) ausgebildet ist.

8. Mechanismus zur Positionsverstellung nach Anspruch 3, **dadurch gekennzeichnet, dass** die Klammer (540) zum Anbringen einer Halterung einstückig mit der hinteren Schwenkklammer (524) des Parallelogramms ist.

9. Mechanismus zur Positionsverstellung nach Anspruch 3, **dadurch gekennzeichnet, dass** die Gasfeder (535) an dem oberen Armbalken (533) mittels eines Stiftes (537) an der Gasfeder (535) befestigt ist, der mit einer Öffnung (570) in der oberen Oberfläche des oberen Armbalkens (533) zusammenwirkt.

10. Mechanismus zur Positionsverstellung, umfassend:
einen Vorrichtungs-Haltearm, umfassend:
(a) ein vorderes Armglied (422),
(b) ein hinteres Armglied (421),
(c) eine versetzte Gelenkanordnung (430), die eine einzige Schwenkachse aufweist und das vordere Armglied (422) so mit dem hinteren Armglied (421) verbindet, dass das vordere Armglied (422) und das hintere Armglied (421) in einer geraden Linie zueinander ausgerichtet sind, wenn der Haltearm vollständig ausgefahren ist, wobei die Gelenkanordnung (430) zu einer Seite hin versetzt ist,
(d) eine Klammer (425) zum Anbringen einer Vorrichtung, und
(e) eine Klammer (415) zum Anbringen einer Halterung, wobei das hintere Armglied (421) eine größere Länge aufweist als das vordere Armglied (422), und
die Klammer (600) nach Anspruch 1 oder 2.

11. Mechanismus zur Positionsverstellung nach Anspruch 10, **dadurch gekennzeichnet, dass** der Haltearm in der Lage ist, sich an der versetzten Gelenkanordnung (430) so zu falten, dass das vordere Armglied (422) angrenzend an das hintere Armglied (421) positioniert ist.

12. Mechanismus zur Positionsverstellung nach Anspruch 10, **dadurch gekennzeichnet, dass** die Klammer (425) zum Anbringen einer Vorrichtung eine Mehrzahl standardisierter Löcher für das Anbringen einer Vorrichtung aufweist.

13. Mechanismus zur Positionsverstellung nach Anspruch 10, **dadurch gekennzeichnet, dass** die Klammer (415) zum Anbringen einer Halterung für das Anbringen an einer Säule ausgebildet ist.

14. Mechanismus zur Positionsverstellung nach Anspruch 10, **dadurch gekennzeichnet, dass** die versetzte Gelenkanordnung (430) einen Mechanismus zum Verriegeln des Haltearms in einer ausgefahrenen Position umfasst.

15. Eine Säule (610) zum Tragen des Vorrichtungs-Haltearms (650), **dadurch gekennzeichnet, dass** die Säule (610) eine Klammer (600) nach Anspruch 1 oder 2 umfasst.

## Revendications

1. Un manchon (600) pour immobiliser de manière réglable un bras support de dispositif (650) en un point donné sur un montant (610), le manchon comprenant un élément de ressort (607), ledit élément de ressort (607) produisant une force de serrage, et étant **caractérisé en ce que** le manchon (600) comprend également un moyen de recouvrement annulaire compressible (605) pourvu d'une ouverture centrale (601) traversante et possédant une extrémité oblongue (606), et l'élément de ressort (607) est contenu à l'intérieur du moyen de recouvrement (605), et l'élément de ressort (607) fournit une force de serrage vers l'ouverture centrale (601) du moyen de recouvrement (605), et la compression de l'extrémité oblongue (606) du moyen de recouvrement (605) exerce une pression sur l'élément de ressort (607) en obligeant l'élément de ressort (607) à adopter une forme plus arrondie, ce qui réduit la force de serrage de l'élément de ressort (607).

2. Le manchon selon la revendication 1, dans lequel l'élément de ressort (607) comprend un ressort en acier aplati possédant deux extrémités libres (612), dans lequel le ressort en acier (607) est arrondi de façon que les extrémités libres (612) soient proches l'une de l'autre.

3. Un mécanisme de réglage positionnel, comprenant un bras support de dispositif comprenant : a) un bras horizontal (510) ; b) un bras en parallélogramme (520) comprenant : i) une barre de bras inférieure (530), ii) une barre de bras supérieure (533) comprenant une surface supérieure et deux surfaces latérales opposées, iii) une monture pivotante de parallélogramme avant (522), iv) une monture pivotante de parallélogramme arrière (524) et v) un ressort à gaz (535) fixé par l'une de ses extrémités à la barre de bras inférieure et fixé par son autre extrémité à la surface supérieure de la barre de bras supérieure ; c) un double raccord pivotant (515) reliant le bras horizontal (510) au bras en parallélogramme (520), ledit double raccord pivotant (510) comprenant un pivot avant (517) et un pivot arrière (519), les deux pivots pivotant dans le même plan ; d) une platine de raccordement de dispositif (525) fixée au bras horizontal (510) ; et e) une console de raccordement de support (540) fixée au bras en parallélogramme (520) ; et le manchon (600) de la revendication 1 ou de la revendication 2.

4. Le mécanisme de réglage positionnel selon la revendication 3, dans lequel le double raccord pivotant (510) autorise un mouvement latéral du bras horizontal (510) sur 180° de part et d'autre du bras support de dispositif.

5. Le mécanisme de réglage positionnel selon la revendication 3, dans lequel le bras support de dispositif est apte à se plier au niveau du double raccord pivotant (510), de façon que le bras horizontal (510) soit positionné de manière adjacente au bras en parallélogramme (520).

6. Le mécanisme de réglage positionnel selon la revendication 3, dans lequel la platine de raccordement de dispositif (425) est pourvue d'une pluralité de trous normalisés pour fixer un dispositif.

7. Le mécanisme de réglage positionnel selon la revendication 3, dans lequel la console de raccordement de support (540) est apte à être fixée à un montant (610).

8. Le mécanisme de réglage positionnel selon la revendication 3, dans lequel la console de raccordement de support (540) fait corps avec la monture pivotante de parallélogramme arrière (524).

9. Le mécanisme de réglage positionnel selon la revendication 3, dans lequel le ressort à gaz (535) est fixé à la barre de bras supérieure (533) par un téton (537) du ressort à gaz (535), lequel coopère avec une ouverture (570) ménagée dans la surface supérieure de la barre de bras supérieure (533).

10. Un mécanisme de réglage positionnel, comprenant un bras support de dispositif, comprenant a) une membrure de bras avant (422) ; b) une membrure de bras arrière (421) ; c) un raccord pivotant déporté (430) possédant un axe de pivotement unique et reliant la membrure de bras avant (422) à la membrure de bras arrière (421), de façon que, lorsque le bras support est complètement étendu, la membrure de bras avant (422) et la membrure de bras arrière (421) soient alignées sur une ligne droite, le raccord pivotant (430) étant déporté sur un côté ; d) une platine de raccordement de dispositif (425) ; et e) une console de raccordement de support (415), la membrure de bras arrière (421) étant supérieure en longueur à la membrure de bras avant (422) ; et le manchon (600) de la revendication 1 ou de la revendication 2.

11. Le mécanisme de réglage positionnel selon la revendication 10, dans lequel le bras support est apte à
se plier au niveau du raccord pivotant déporté (430), de façon que la membrure de bras avant (422) soit positionnée de manière adjacente à la membrure de bras arrière (421).

12. Le mécanisme de réglage positionnel selon la revendication 10, **caractérisé en ce que** la platine de raccordement de dispositif (425) est pourvue d'une pluralité de trous normalisés pour fixer un dispositif.

13. Le mécanisme de réglage positionnel selon la revendication 10, dans lequel la console de raccordement de support (415) est apte à être fixée à un montant.

14. Le mécanisme de réglage positionnel selon la revendication 10, **caractérisé en ce que** le raccord pivotant déporté (430) comprend un mécanisme pour bloquer le bras support dans une position étendue.

15. Un montant (610) pour supporter un bras support de dispositif (650), dans lequel le montant (610) comprend un manchon (600) selon la revendication 1 ou la revendication 2.
